# EUROPEAN PATENT APPLICATION

(11) **EP 4 478 476 A2**
(43) Date of publication of application: **18.12.2024**
(21) Application number: 24166914.2
(22) Date of filing: 27.03.2024
(51) Int. Cl.: H01M 10/42, H01M 10/48, H01M 50/209, H01M 50/298, H01M 50/507, H01M 50/569

(54) **BRACKET ASSEMBLIES, WIRING HARNESS INTEGRATION ASSEMBLIES, AND BATTERY MODULES**

(30) Priority: 16.06.2023 CN 202321556707 U
(71) Applicant: Eve Energy Co., Ltd., Huizhou, Guangdong 516006 (CN)
(72) Inventor: YIN, Yihua, Huizhou, 516006 (CN)
(74) Representative: Murgitroyd & Company

(57) **Abstract**

Disclosed herein are a bracket assembly, a wiring harness integration assembly, and a battery module. The bracket assembly includes a wiring harness bracket and a fixing bracket that are detachably connected to each other, the wiring harness bracket is configured to mount an acquisition wiring harness, a side of the wiring harness bracket is provided with a mounting portion for mounting a connector, a first connecting portion is protrudingly arranged on the mounting portion, the mounting bracket includes a fixing portion and a second connecting portion, the fixing portion is used for mounting the connector, and the second connecting portion is detachably connected to the first connecting portion.

## Description

### TECHNICAL FIELD

The present disclosure relates to a technical field of batteries, and in particular to bracket assemblies, wiring harness integration assemblies, and battery modules.

### BACKGROUND

A battery module is a power module of a new energy power supply system, and generally consists of a cell, a connecting member, an acquisition wiring harness for signal sampling, a connector for signal output, a bracket assembly, and the like.

One battery module includes a plurality of cells, a connecting member is welded to a top surface of a post of each of the cells to realize series or parallel connection between the cells, a acquisition wiring harness is electrically connected to the connecting member to acquire signals such as voltage and temperature of the cells, a connector is electrically connected to the acquisition wiring harness to output signals acquired by the acquisition wiring harness, and a bracket assembly is used to isolate the cells from the connecting member, the acquisition wiring harness, and the connector to protect the battery module. However, the existing mounting and fixing modes of the acquisition wiring harness and the connector on the bracket assembly make the acquisition wiring harness excessively long and loose, so that the acquisition wiring harness may be prone to collide with other structures during vibration testing, thereby easily causing the signal acquisition failure.

### SUMMARY

The present disclosure provides bracket assemblies, wiring harness integration assemblies, and battery modules to solve the above technical problems.

In a first aspect, embodiments of the present disclosure provide a bracket assembly for a battery module, the bracket assembly including: a wiring harness bracket configured to mount an acquisition wiring harness, a side of the wiring harness bracket is provided with a mounting portion for mounting a connector, and a first connecting portion is protrudingly arranged on the mounting portion; and a fixing bracket detachably connected to the wiring harness bracket, the fixing bracket includes a fixing portion and a second connecting portion that are connected to each other, the fixing portion is configured to mount the connector, and the second connecting portion is detachably connected to the first connecting portion.

In a second aspect, embodiments of the present disclosure provide a wiring harness integration assembly including: the above bracket assembly; an acquisition wiring harness arranged on a wiring harness bracket of the bracket assembly; and a connector mounted on the fixing portion of the fixing bracket in the bracket assembly, the connector being electrically connected to the acquisition wiring harness.

In a third aspect, an embodiment of the present disclosure provides a battery module including a plurality of cells and the above wiring harness integration assembly, and the cells are electrically connected to the wiring harness integration assembly.

### Beneficial effect

An advantageous effect of the present disclosure is that the bracket assembly provided in the present disclosure is used for a battery module, the bracket assembly includes a wiring harness bracket and a fixing bracket, the wiring harness bracket is used for mounting the acquisition wiring harness, a side of the wiring harness bracket is provided with the mounting portion, the mounting portion is used for mounting the connector, the first connecting portion is protrudingly arranged on the mounting portion, the fixing bracket is detachably connected to the wiring harness bracket, the fixing bracket includes the fixing portion and the second connecting portion, the fixing portion is used for mounting the connector, and the second connecting portion is detachably connected to the first connecting portion. According to the present disclosure, a fixing bracket detachably connected to the wiring harness bracket is provided, so that when the connector and the acquisition wiring harness are installed on the wiring harness bracket, the connector can be first fixed by the fixing part of the fixing bracket, and then the acquisition wiring harness is electrically connected to the connector, and then the fixing bracket, the connector and the acquisition wiring harness are integrally installed on the wiring harness bracket through the connection between the second connecting part and the first connecting part, thereby avoiding loosening of the acquisition wiring harness due to the excessive length thereof after the connector is fixed, thereby reducing the risk of signal collection failure.

According to the wiring harness integration assembly provided in the present disclosure, by integrating the acquisition wiring harness, the connecting assembly, and the connector all on one bracket assembly, it is possible to realize high integration of the wiring harness integration assembly in the battery module so as to facilitate rapid assembly of the battery module.

The battery module provided by the present disclosure includes a plurality of cells and a wiring harness integration assembly, the wiring harness integration assembly is electrically connected to the cells to collect signals such as voltage and temperature of the cells, and is electrically connected to the BMS module through a connector so as to output signals such as voltage and temperature monitored by the acquisition wiring harness, thereby realizing the monitoring and maintenance of the working state and service performance of the battery module to ensure safe and stable use of the battery module.

### BRIEF DESCRIPTION OF THE DRAWINGS

FIG. 1 is a schematic structural diagram of a wiring harness integration assembly according to an embodiment of the present disclosure;
FIG. 2 is an enlarged structural diagram of a region A shown in FIG. 1 according to an embodiment of the present disclosure;
FIG. 3 is a schematic structural diagram of a wiring harness bracket according to an embodiment of the present disclosure;
FIG. 4 is an enlarged structural diagram of a region B shown in FIG. 3 according to an embodiment of the present disclosure;
FIG. 5 is a schematic structural diagram of a fixing bracket according to an embodiment of the present disclosure; and
FIG. 6 is a schematic structural diagram of a battery module according to an embodiment of the present disclosure.

### List of reference signs:

1. battery module; 10, wiring harness integration assembly; 100, bracket assembly; 110, wiring harness bracket; 111, mounting portion; 112, first connecting portion; 1121, chute; 1122, mounting port; 1123, stop block; 1124, stop portion; 120, fixing bracket; 121, fixing portion; 1211, first side surface; 1212, second side surface; 1213, mounting slot; 122, second connecting portion; 123, sliding block; 1231, avoidance slot; 124, abutment block; X, first direction; Y, second direction; 200, acquisition wiring harness; 300, connecting assembly; 400, connector; 410, elastic member; 20, cell.

### DETAILED DESCRIPTION

Embodiments of the present disclosure provide bracket assemblies, wiring harness integration assemblies, and battery modules, which are described in detail below. It should be noted that the order in which the following embodiments are described is not intended to limit the preferred order of the embodiments.

Firstly, an embodiment of the present disclosure provides a bracket assembly for a battery module, the battery module consists of a plurality of cells connected in series or in parallel. When the plurality of cells are connected in series or in parallel, and signals such as a voltage or a temperature of the battery module are acquired and output, it is necessary to provide the bracket assembly above the cells, so as to facilitate the installation of a connecting assembly connecting the cells, a acquisition wiring harness, and a connector.

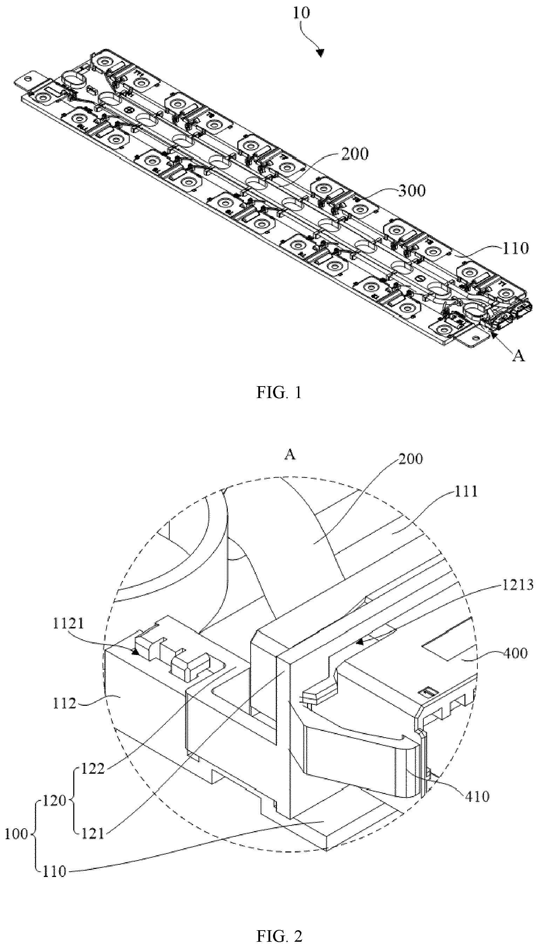

As shown in FIGS. 1 and 2, the bracket assembly 100 includes a wiring harness bracket 110 and a fixing bracket 120 that is detachably connected to the wiring harness bracket 110. The wiring harness bracket 110 is configured to mount the acquisition wiring harness 200, a side of the wiring harness bracket 110 is provided with a mounting portion 111, the mounting portion 111 is configured to mount a connector 400, and a first connecting portion 112 is protrudingly arranged on the mounting portion 111 to facilitate detachable mounting of the fixing bracket 120.

The fixing bracket 120 includes a fixing portion 121 and a second connecting portion 122 that are connected to each other, the fixing portion 121 is configured to mount the connector 400, and the second connecting portion 122 is detachably connected to the first connecting portion 112. That is, the fixing bracket 120 and the connector 400 are integrally mounted on the mounting portion 111 of the wiring harness bracket 110, and the fixing bracket 120 is detachably connected to the wiring harness bracket 110 by the cooperation of the second connecting portion 122 and the first connecting portion 112.

That is, when the connector 400 is mounted, the connector 400 is mounted on the fixing portion 121 of the fixing bracket 120 firstly, and then the acquisition wiring harness 200 is electrically connected to the connector 400. Then, the fixing bracket 120, the connector 400, and the acquisition wiring harness 200 are integrally mounted to the wiring harness bracket 110 through the connection of the second connecting portion 122 and the first connecting portion 112, and the acquisition wiring harness 200 is fixed on the wiring harness bracket 110, so that it is possible to prevent the acquisition wiring harness 200 from being loosened due to the excessive length of the acquisition wiring harness 200 after the connector 400 is fixed, so as to avoid collision of the acquisition wiring harness 200 with other structures during the vibration test, thereby reducing the risk of signal acquisition failure. At the same time, the detachable connection of the fixing bracket 120 to the wiring harness bracket 110 can also avoid the problem that the connector 400 cannot be effectively fixed due to the small stacking space of the battery module 1.

It should be noted that the specific structure and the connection method of the first connecting portion 112 and the second connecting portion 122 are not particularly limited, and it is only necessary to ensure that the fixing bracket 120 and the wiring harness bracket 110 are two separate individuals and can be detachably connected to each other.

In an embodiment of the present disclosure, the bracket assembly 100 is used for a battery module 1, the bracket assembly 100 includes the wiring harness bracket 110 and the fixing bracket 120, the wiring harness bracket 110 is configured to mount the acquisition wiring harness 200, a side of the wiring harness bracket 110 is provided with the mounting portion 111, the mounting portion 111 configured to mount the connector 400, the first connecting portion 112 is protrudingly arranged on the mounting portion 111, the fixing bracket 120 is detachably connected to the wiring harness bracket 110, the fixing bracket 120 includes the fixing portion 121 and the second connecting portion 122 that are connected to each other, the fixing portion 121 is used for mounting the connector 400, and the second connecting portion 122 is detachably connected to the first connecting portion 112. According to the present disclosure, by providing the fixing bracket 120 detachably connected to the wiring harness bracket 110, when the connector 400 and the acquisition wiring harness 200 are mounted to the wiring harness bracket 110, the connector 400 can be first fixed by the fixing portion 121 of the fixing bracket 120, the acquisition wiring harness 200 is electrically connected to the connector 400, and then the fixing bracket 120, the connector 400 and the acquisition wiring harness 200 are integrally mounted to the wiring harness bracket 110 through the connection of the second connecting portion 122 and the first connecting portion 112, so that it is possible to avoid loosening of the acquisition wiring harness 200 due to the excessive length thereof after the connector 400 is fixed, thereby reducing the risk of signal acquisition failure.

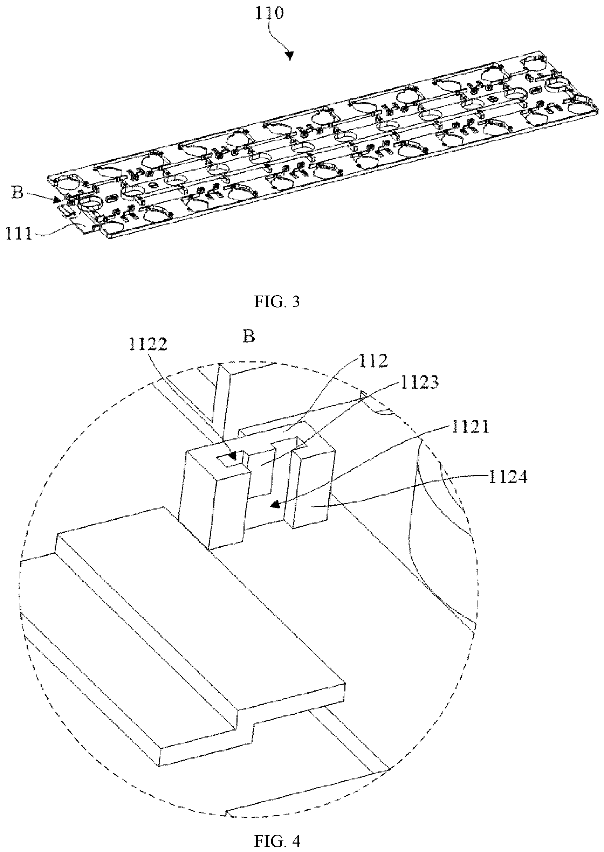

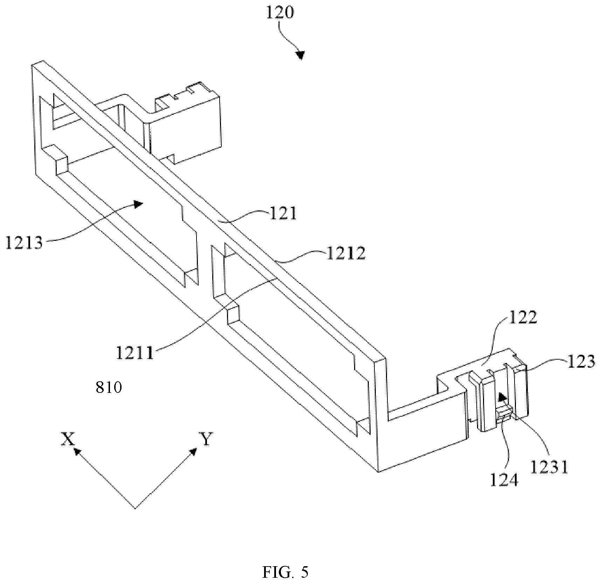

Alternatively, as shown in FIGS. 3, 4, and 5, a sliding block 123 is connected to a side of the second connecting portion 122 facing the first connecting portion 112, a chute 1121 is provided at a side of the first connecting portion 112 facing the second connecting portion 122, the chute 1121 extends in a direction away from the mounting portion 111, the chute 1121 is provided with a mounting port 1122 at a side of the first connecting portion 112 away from the mounting portion 111, and the sliding block 123 is slidably fitted into the chute 1121 through the mounting port 1122. That is, when the fixing bracket 120 is mounted to the mounting portion 111 of the wiring harness bracket 110, the sliding block 123 on the second connecting portion 122 slides into the chute 1121 from the mounting port 1122 of the first connecting portion 112, and slides along the extension direction of the chute 1121 to contact with each other.

In this case, the first connecting portion 112 may be directly deformed by the plasticity of the first connecting portion 112, and after the sliding block 123 is slid into the chute 1121, the first connecting portion 112 and the second connecting portion 122 may be brought into contact with each other by a reaction force of plastic deformation.

In some embodiments, a stop block 1123 is protrudingly arranged on a bottom of the chute 1121, a side of the sliding block 123 facing the stop block 1123 is provided with an avoidance slot 1231, the avoidance slot 1231 extends through the sliding block 123 along a sliding direction of the sliding block 123, the avoidance slot 1231 is used for avoiding the stop block 1123, an abutment block 124 is protrudingly arranged on a bottom of the avoidance slot 1231, and the abutment block 124 is used for abutting a side of the stop block 1123 away from the mounting port 1122. That is, when the sliding block 123 is slid into the chute 1121 from the mounting port 1122, the abutment block 124 on the sliding block 123 slides to and is abutted against the side of the stop block 1123 away from the mounting port 1122 in the chute 1121, and the stop block 1123 is located in the avoidance slot 1231, so that the fixing bracket 120 is engaged with the wiring harness bracket 110. At this time, the stopper block 1123 can restrict the upward movement of the fixing bracket 120, and prevent the fixing bracket 120 from moving upward and detaching from the wiring harness bracket 110.

In this case, a surface of the sliding block 123 which is first in contact with the stop block 1123 during the sliding process can be provided as an inclined surface so as to reduce the resistance in the sliding process of the sliding block 123 into the chute 1121, thereby facilitating the installation of the fixing bracket 120 and the wiring harness bracket 110.

In other embodiments, there is a gap between the sliding block 123 and the second connecting portion 122, and the two opposite side walls of the chute 1121 are provided with protruding stop portions 1124 for abutting against a side of the sliding block 123 facing the second connecting portion 122. That is, an end of the sliding block 123 away from the mounting portion 111 is connected to the second connecting portion 122, and an end of the sliding block 123 facing toward the mounting portion 111 is spaced apart from the second connecting portion 122, and a gap is formed between the second connecting portion 122 and the end of the sliding block 123 facing toward the mounting portion 111.

That is, when the fixing bracket 120 and the wiring harness bracket 110 are mounted, the sliding block 123 slides into the gap between the stop portion 1124 and the bottom of the chute 1121 from the mounting port 1122, and a side of the sliding block 123 facing the second connecting portion 122 abuts against the stop portion 1124, that is, the stop portion 1124 is positioned between the second connecting portion 122 and the sliding block 123, so as to limit the movement of the fixing bracket 120 in the front, backward, left and right directions, thereby further improving the mounting stability of the fixing bracket 120 and the wiring harness bracket 110.

It should be noted that the positions at which the chute 1121 on the first connecting portion 112 and the sliding block 123 on the second connecting portion 122 are provided can be interchanged, that is, the sliding block is provided on the first connecting portion 112, and the chute is provided on the second connecting portion 122, so that the fixing bracket 120 is detachably connected to the wiring harness bracket 110. The specific structure thereof can be described with reference to the related description in the foregoing embodiment, and details are not described herein.

Optionally, the mounting portion 111 is provided with two protruding first connecting portions 112 which are arranged in parallel in a first direction X, the fixing bracket 120 includes two second connecting portions 122 which are connected to opposite ends of the fixing portion 121 in the first direction X respectively, and the second connecting portions 122 are connected in one-to-one correspondence with the first connecting portions 112. That is, the fixing bracket 120 is connected to the wiring harness bracket 110 at opposite ends of the fixing bracket 120 in the first direction X at the same time, so that the mounting stability of the fixing bracket 120 can be improved, and the stress on the fixing bracket 120 can be more uniform, thereby contributing to improving the structural stability of the fixing bracket 120.

In some embodiments, the fixing portion 121 has first and second side surfaces 1211 and 1212 opposite to each other in a second direction Y, the second connecting portion 122 is connected to the second side surface 1212, the first side surface 1211 is provided with a mounting slot 1213, the mounting slot 1213 extends in the second direction Y and extends through the second side surface 1212, and a side wall of the mounting slot 1213 is configured to abut the connector 400. That is, when the connector 400 is mounted, the connector 400 can be mounted to the mounting slot 1213 from the first side surface 1211 and protruded from the second side surface 1212, and the connector 400 can be fixed by abutting the side wall of the mounting slot 1213 against the connector 400. An end of the connector 400 protruding from the second side surface 1212 is configured to be electrically connected to the acquisition wiring harness 200.

The second direction Y corresponds to the arrangement direction of the plurality of cells 20 in the battery module 1, and the first direction X is a direction perpendicular to the second direction Y in the horizontal plane, that is, the first direction X is the distribution direction of the positive and negative posts of a single cell 20.

In other embodiments, the first side surface 1211 is provided with at least two mounting slots 1213, which are spaced apart in the first direction X, each of the mounting slots 1213 can be used to mount the connector 400, so that at least two connectors 400 of the same type or different types can be mounted on the fixing bracket 120 at the same time to meet different design requirements of the battery module 1.

Next, an embodiment of the present disclosure further provides a wiring harness integration assembly, which includes a bracket assembly, and a specific structure of the bracket assembly is described with reference to the foregoing embodiments. Since the wiring harness integration assembly adopts all technical solutions of all the foregoing embodiments, it has at least all beneficial effects caused by the technical solutions of the foregoing embodiments, which are not repeated herein again.

As shown in FIGS. 1 and 2, the wiring harness integration assembly 10 includes the bracket assembly 100, a connecting assembly 300, an acquisition wiring harness 200, and a connector 400, the connecting assembly 300 is provided on the wiring harness bracket 110 of the bracket assembly 100, the connecting assembly 300 is configured to be electrically connected to electrodes of the cells 20 in the battery module 1, the acquisition wiring harness 200 is provided on the wiring harness bracket 110 of the bracket assembly 100, the acquisition wiring harness 200 is electrically connected to the connecting assembly 300 to collect signals such as voltage and temperature of the cells 20, the connector 400 is mounted on the fixing portion 121 of the fixing bracket 120 in the bracket assembly 100, and the connector 400 is electrically connected to the acquisition wiring harness 200 to realize output of the collected signals of the acquisition wiring harness 200. In the present disclosure, by integrating the acquisition wiring harness 200, the connecting assembly 300, and the connector 400 all on one bracket assembly 100, it is possible to achieve a high degree of integration of the wiring harness integration assembly 10 in the battery module 1 so as to facilitate rapid assembly of the battery module 1.

Specifically, the bracket assembly 100 includes the wiring harness bracket 110 and the fixing bracket 120, a side of the wiring harness bracket 110 is provided with a mounting portion 111, a first connecting portion 112 is protrudingly arranged on the mounting portion 111, the fixing bracket 120 includes a fixing portion 121 and a second connecting portion 122 that are connected to each other, the fixing portion 121 is used for mounting the connector 400, and the second connecting portion 122 is detachably connected to the first connecting portion 112. According to the present disclosure, by providing the fixing bracket 120 detachably connected to the wiring harness bracket 110, when the connector 400 and the acquisition wiring harness 200 are mounted to the wiring harness bracket 110, the connector 400 can be first fixed by the fixing portion 121 of the fixing bracket 120, the acquisition wiring harness 200 is electrically connected to the connector 400, and then the fixing bracket 120, the connector 400 and the acquisition wiring harness 200 are integrally mounted to the wiring harness bracket 110 through the connection of the second connecting portion 122 and the first connecting portion 112, so that it is possible to avoid loosening of the acquisition wiring harness 200 due to the excessive length thereof after the connector 400 is fixed, thereby reducing the risk of signal acquisition failure.

The fixing portion 121 is provided with the mounting slot 1213, and at least one side of the connector 400 is provided with an elastic member 410 which abuts against the side wall of the mounting slot 1213 on the fixing portion 121, so that the connector 400 is mounted in the mounting slot 1213. By providing the elastic member 410 on at least one side of the connector 400, when the connector 400 is mounted in the mounting slot 1213, effective abutment of the connector 400 with the side wall of the mounting slot 1213 can be achieved by elastic deformation of the elastic member 410 to ensure mounting stability of the connector 400. At the same time, since the elastic member 410 is elastic, the fixing bracket 120 and the connector 400 can be tolerance-fitted, that is, the mounting slot 1213 on the fixing bracket 120 can be adapted to the connectors 400 of different sizes at the same time, so as to improve the applicability of the fixing bracket 120.

In some embodiments, the connector 400 is provided with an elastic member 410 on each of opposite sides in the first direction X, so that the connector 400 and the mounting slot 1213 of the fixing bracket 120 can be symmetrically fixed to reduce the stress concentration generated during the fixing process.

The connecting assembly 300 includes a first connecting member and a second connecting member, the first connecting member is used for connecting two adjacent cells 20 in the battery module 1 to realize the series or parallel connection of the two adjacent cells 20, and the second connecting member is used for electrically connecting with an output electrode of the battery module 1. The output electrodes of the battery module 1 are located at both ends of the battery module 1 in the alignment direction of the plurality of cells 20, that is, the second connecting members are provided at both ends of the wiring harness bracket 110 so as to facilitate the connection design of the battery module 1 to the external output circuit.

It should be noted that a thermistor NTC is provided at an end of the partial acquisition wiring harness 200 connected to the connecting assembly 300 to monitor the temperature of the corresponding cell 20 in the battery module 1. After welding the acquisition wiring harness 200 to the first or second connecting members in the connecting assembly 300, a layer of UV glue can be applied to the connection to enhance the welding strength of the acquisition wiring harness 200 and the connecting assembly 300, and the foreign matter can be prevented from contacting the welding area of the acquisition wiring harness 200 and the connecting assembly 300, thereby improving the connection stability of the acquisition wiring harness 200 and the connecting assembly 300.

Finally, an embodiment of the present disclosure further provides a battery module including a wiring harness integration assembly, a specific structure of the wiring harness integration assembly refers to the above-described embodiment. Since the battery module employs all the technical solutions of all the above-described embodiments, it has at least all beneficial effects caused by the technical solutions of the foregoing embodiments, which are not repeated herein again.

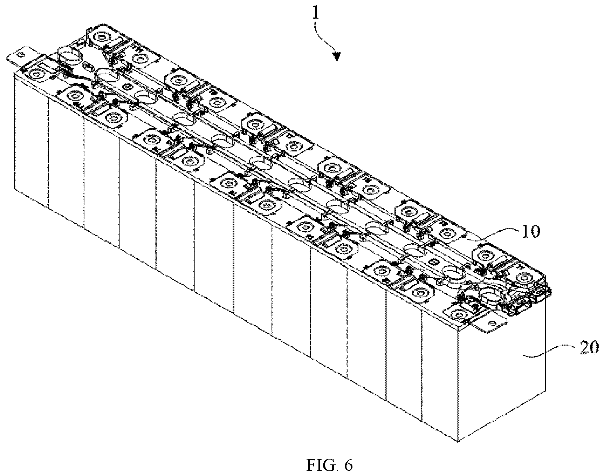

As shown in FIG. 6, the battery module 1 includes the plurality of cells 20 and the wiring harness integration assembly 10 electrically connected to the cells 20 to collect signals such as voltage and temperature of the cells 20, and electrically connected to the BMS module through the connector 400 so as to output signals such as voltage and temperature monitored by the acquisition wiring harness 200, thereby enabling monitoring and maintenance of the operating state and service performance of the battery modules 1 to ensure safe and stable use of the battery modules 1.

Specifically, as shown in FIGS. 1 and 2, the wiring harness integration assembly 10 includes the bracket assembly 100 including the wiring harness bracket 110 and the fixing bracket 120, a side of the wiring harness bracket 110 is provided with the mounting portion 111, the first connecting portion 112 is protrudingly arranged on the mounting portion 111, the fixing bracket 120 includes the fixing portion 121 and the second connecting portion 122 which are connected to each other, the fixing portion 121 is used to mount the connector 400, and the second connecting portion 122 is detachably connected to the first connecting portion 112. According to the present disclosure, the fixing bracket 120 which is detachably connected to the wiring harness bracket 110 is provided, so that when the connector 400 and the acquisition wiring harness 200 are mounted to the wiring harness bracket 110, the connector 400 can be first fixed by the fixing portion 121 of the fixing bracket 120, the acquisition wiring harness 200 is electrically connected to the connector 400, and then the fixing bracket 120, the connector 400 and the acquisition wiring harness 200 are integrally mounted to the wiring harness bracket 110 through the connection of the second connecting portion 122 and the first connecting portion 112, and the acquisition wiring harness 200 is fixed to the wiring harness bracket 110, thereby avoiding loosening of the acquisition wiring harness 200 due to the excessive length thereof after the connector 400 is fixed, thereby reducing the risk of signal acquisition failure.

## Claims

1. A bracket assembly (100) for a battery module, **characterized by** comprising:
a wiring harness bracket (110) configured to mount an acquisition wiring harness (200), wherein a side of the wiring harness bracket (110) is provided with a mounting portion (111) for mounting a connector (400), and a first connecting portion (112) is protrudingly arranged on the mounting portion (111); and
a fixing bracket (120) detachably connected to the wiring harness bracket (110), wherein the fixing bracket (120) comprises a fixing portion (121) and a second connecting portion (122) that are connected to each other, the fixing portion (121) is configured to mount the connector (400), and the second connecting portion (122) is detachably connected to the first connecting portion (112).

2. The bracket assembly (100) according to claim 1, **characterized in that** a sliding block (123) is connected to a side of the second connecting portion (122) facing the first connecting portion (112), the first connecting portion (112) is provided with a chute (1121) at a side of the first connecting portion (112) facing the second connecting portion (122), the chute (1121) extends in a direction away from the mounting portion (111), the chute (1121) forms a mounting port (1122) at a side of the first connecting portion (112) away from the mounting portion (111), and the sliding block (123) is slidably fitted into the chute (1121) through the mounting port (1122).

3. The bracket assembly (100) according to claim 2, **characterized in that** a stop block (1123) is protrudingly arranged on a bottom of the chute (1121), a side of the sliding block (123) facing the stop block (1123) is provided with an avoidance slot (1231), the avoidance slot (1231) extends through the sliding block (123) in a sliding direction of the sliding block (123), the avoidance slot (1231) is configured to avoid the stop block (1123), an abutment block (124) is protrudingly arranged on a bottom of the avoidance slot (1231), and the abutment block (124) is configured to abut against a side of the stop block (1123) away from the mounting port (1122).

4. The bracket assembly (100) according to claim 2, **characterized in that** there is a gap between the sliding block (123) and the second connecting portion (122), stop portions (1124) are protrudingly arranged on two opposite side walls of the chute (1121), and each of the stop portions (1124) is configured to abut against a side of the sliding block (123) facing the second connecting portion (122).

5. The bracket assembly (100) according to any one of claims 1 to 4, **characterized in that** there are two first connecting portions (112) protrudingly arranged on the mounting portion (111), the two first connecting portions (112) are arranged side by side in a first direction (X); the fixing bracket (120) comprises two second connecting portions (122) connected to opposite ends of the fixing portion (121) in the first direction (X), and the second connecting portions (122) are connected in one-to-one correspondence with the first connecting portions (112).

6. The bracket assembly (100) according to claim 5, **characterized in that** the fixing part (121) comprises a first side surface (1211) and a second side surface (1212) opposite to each other in a second direction (Y), the second connecting parts (122) are connected to the second side surface (1212), the first side surface (1211) is provided with a mounting slot (1213), the mounting slot (1213) extends in the second direction (Y) and extends through the second side surface (1212), and a side wall of the mounting slot (1213) is configured to abut against the connector (400).

7. The bracket assembly (100) according to claim 6, **characterized in that** the first side surface (1211) is provided with at least two mounting slots (1213), and the mounting slots (1213) are spaced apart from each other in the first direction (X).

8. A wiring harness integration assembly (10), **characterized by** comprising:
the bracket assembly (100) according to any one of claims 1 to 7;
an acquisition wiring harness (200) arranged on the wiring harness bracket (110) of the bracket assembly (100); and
a connector (400) mounted on the fixing portion (121) of the fixing bracket (120) in the bracket assembly (100), the connector (400) being electrically connected to the acquisition wiring harness (200).

9. The wiring harness integration assembly (10) according to claim 8, **characterized in that** at least one side of the connector (400) is provided with an elastic member (410), the elastic member (410) abuts against a side wall of a mounting slot (1213) on the fixing portion (121) so that the connector (400) is mounted into the mounting slot (1213).

10. A battery module (1), **characterized by** comprising a plurality of cells (20) and the wiring harness integration assembly (10) according to claims 8 or 9, wherein the cells (20) are electrically connected to the wiring harness integration assembly (10).
